# EUROPÄISCHE PATENTSCHRIFT

(11) **EP 0 654 516 B1**
(45) Veröffentlichungstag und Bekanntmachung des Hinweises auf die Patenterteilung: **14.05.1997**
(21) Anmeldenummer: 94116616.7
(22) Anmeldetag: 21.10.1994
(51) Int. Cl.: C09K 7/02, E21B 33/13

(54) **Flüssiges Bohrspül- und Zementierungsmittel**
Drill and cementation fluid
Fluide de forage et de cimentation

(30) Priorität: 18.11.1993 DE 4339386
(43) Veröffentlichungstag der Anmeldung: 24.05.1995
(73) Patentinhaber: RWE-DEA AKTIENGESELLSCHAFT FÜR MINERALOEL UND CHEMIE, 22297 Hamburg (DE)
(72) Erfinder: Schuhbauer, Werner, D-29323 Wietze (DE); Volz, Hartwig, D-29221 Celle (DE)
(74) Vertreter: Schupfner, Gerhard D.

(56) Entgegenhaltungen:
- EP-A- 0 171 962
- EP-A- 0 401 842
- FR-A- 2 488 325
- US-A- 3 953 336
- US-A- 3 989 632
- US-A- 4 422 947
- US-A- 5 284 513
- US-A- 5 314 022

## Beschreibung

Die Erfindung betrifft die Anwendung ein Flüssigmedium, das sowohl als Bohrspül- als auch Verfüllungsmittel geeignet ist. Es wird beim Abteufen von seismischen Flachbohrungen zunächst als Bohrspülflüssigkeit verwendet. Nach dem Abteufen und der Arbeit in der Bohrung aber erstarrt es und stellt damit auch ein wirksames Verfüllungsmedium dar.

Ein wesentlicher Verfahrensschritt bei der Onshore-Exploration auf Kohlenwasserstoffe ist das seismische Flachbohren. Hierbei werden etwa 10 bis 30 m tiefe Bohrungen abgeteuft, diese mit einer Sprengladung befüllt und aus dem Reflexionsverhalten der Schallwellen der gezündeten Ladung Rückschlüsse auf den tieferen Untergrund gezogen.

Bei den modernen seismischen Verfahren ist das benötigte Flachbohrungsraster relativ eng, etwa bis zu 50 Bohrungen/km². Häufig werden dabei auch ein oder mehrere Wasserhorizonte durchteuft. Aus ökologischen Gründen sind beim Abteufen und Verfüllen von seismischen Flachbohrungen daher drei Aspekte wesentlich:
1. Die Bohrhilfsmittel müssen umweltverträglich sein. Dies gilt insbesondere für die Wechselwirkung mit Wasserhorizonten.
2. Während des Abteufens der Bohrungen soll der Flüssigkeitsverlust der verwendeten Bohrspülung, die das erbohrte Gebirgsmaterial zur Oberfläche tragen soll, möglichst niedrig sein. Es soll also ein möglichst abdichtender "Filterkuchen" zwischen Bohrloch und anstehendem Gebirge gebildet werden.
3. Um wasserführende Horizonte untereinander und besonders gegenüber Oberflächenkontamination, beispielsweise landwirtschaftlich verursachten Verunreinigungen, zu schützen, wird ein möglichst effizientes und abdichtendes Verfüllungsmedium benötigt.

Es ist bekannt, beim Abteufen der Bohrung als Spülungsflüssigkeit eine Suspension aus Wasser und Bentonit zu verwenden, wobei die Bentonitzugabe sowohl die rheologischen wie auch die filterkuchenbildenden Eigenschaften von Wasser im gewünschten Sinne beeinflußt.

Das Verfüllen der Bohrung erfolgt üblicherweise mittels Pappröhren, die mit Bentonit gefüllt sind. Die Röhren werden entweder nach dem Ziehen des Bohrgestänges in die Bohrung eingebracht, oder es werden Röhren mit einem Durchmesser, der kleiner als das Bohrgestänge ist, eingeführt und das Gestänge anschließend gezogen. In Kontakt mit Süßwasser quillt der Bentonit und verschließt die Bohrung mehr oder weniger vollständig. Beide Verfahren haben allerdings gravierende Nachteile:
- Bei instablilem Bohrloch (z.B. beim Vorliegen von pressenden Tonen, Gesteinsnachfall) gelingt es aus mechanischen Gründen oft nicht, die Röhren vollständig in das Bohrloch einzubringen. Die Verfüllung ist dann unvollständig.
- Auskolkungen, die beim Abteufen der Bohrung entstanden sind, werden durch den Betonit nicht verfüllt, da das Quellvermögen nicht ausreicht.
- In harten Wässern (hoher Calcium- und Magnesiumgehalt) ist das Quellvermögen von Bentonit beeinträchtigt, was ebenfalls zu einer verschlechterten Abdichtung führt.

Um die genannten Schwierigkeiten bei der Verfüllung zu überwinden, ist in jüngerer Zeit ein Verfahren entwickelt worden, beim Abteufen der Bohrung ein Flüssigmedium zu verwenden, das zunächst als Spülflüssigkeit dient, nach einiger Zeit aber erhärtet und die Bohrung so verfüllt. Ein solches Produkt wird unter dem Handelsnamen SBF-Troptogel^{R} vertrieben. In den wesentlichen Komponenten besteht es aus einem Gemisch von Bentonit und Hochofenzementen, nämlich aus
wasserhaltigem Aluminiumsilikat mit Ca-Silikaten, Ca-Aluminaten und Ca-Ferriten als Zementkomponenten.
Gegenüber der Verfüllung mit Bentonit in Pappröhren hat es den Vorteil, daß die Flüssigkeit zunächst überall hin eindringt und daher mechanische Blockierungen sowie Hohlräume nicht mehr auftreten können.

Auch dieses Produkt hat aber zwei entscheidende Nachteile, die einer weiten Anwendung bisher entgegenstehen:
1. Das Produkt ist nicht sedimentationsbeständig. Vom Einbringen der Suspension in das Bohrloch bis zum Beginn der Aushärtung vergehen etwa 48 Stunden. In dieser Zeit setzen sich die Bentonitbestandteile und häufig auch suspendierte Zementanteile ab. Die Aushärtung erfolgt dann nicht über das gesamte Füllvolumen, sondern nur über ein unteres Teilvolumen.
2. Die filterkuchenbildende Wirkung des Produktes ist nicht zufriedenstellend, so daß während des Abteufens der Bohrung erhebliche Mengen des alkalischen Filtrats in die Bohrlochsumgebung eindringen können. Umgekehrt kann durch Wechselwirkung mit sauren Wässern, wie sie beispielsweise in Mooren auftreten, die Abbindung des Produkts verzögert oder sogar verhindert werden.

Der Erfindung liegt daher die Aufgabe zugrunde, ein Flüssigmedium bereitzustellen, das bei der Anwendung als Bohrspül- und Verfüllungsmedium beim Abteufen von seismischen Flachbohrungen ein verbessertes Sedimentationsverhalten aufweist und eine effizientere Filterkuchenbildung gewährleistet.

Diese Aufgabe wird erfindungsgemäß durch die Bereitstellung eines flüssigen Bohrspül- und Verfüllungsmediums gelöst, das neben der Basissuspension aus Bentonit und Hochofenzementen (SBF-Troptogel®) und Wasser zusätzlich Xanthan (XC) und/oder Hydroxyethylcellulose (HEC) enthält.

Das erfindungsgemäße Flüssigmedium enthält bevorzugt 0,5 g bis 6 g, besonders bevorzugt 1 g bis 4 g und insbesondere 1,25 g bis 3 g XC pro Liter Flüssigmedium bzw. 1 g bis 8 g und insbesondere 2 g bis 6 g HEC pro Liter Flüssigmedium.

Nach einer weiteren Ausführungsform ist das Flüssigmedium gekennzeichnet durch einen Zusatz von einem oder mehreren weiteren polymeren Sacchariden, insbesondere Carboxymethylhydroxyethylcellulose (CMHEC) und Carboxymethylcellulose (CMC) und insbesondere durch die Kombination von XC mit CMHEC, HEC und/oder CMC.

Es wird insbesondere beim Abteufen von seismischen Flachbohrungen eingesetzt.

Erfindungsgemäß werden somit der Basissuspension geringe Mengen an bestimmten polymeren Saccharid-Hilfsstoffen zugesetzt, die das Sedimentationsverhalten wie auch die Filterkuchenbildung entscheidend verbessern.

Als besonders geeignet haben sich hochmolekulare polymere Xanthane erwiesen. Dies sind von Bakterien, z.B. Xanthomonas campestris, produzierte Polysaccharide mit einem Massenmittel der Molmasse von > 1·10⁶ g/mol.

Die folgenden ebenfalls erfindungsgemäß einsetzbaren Celluloseether werden aus Alkalicellulosen hergestellt, die man durch Behandeln von Cellulose mit Natronlauge erhält. Je nach Herkunft, Vorbehandlung und Verarbeitung haben Celluloseether unterschiedliche Molmassen, die in der Regel zwischen 50 000 - 1000 000 g/mol liegen.

### Carboxymethylcellulose (CMC)

Unter CMC wird insbesondere das Natriumsalz der Cellulosemethylcellulose verstanden, das durch Umsetzung von Alkalicellulose mit Chloressigsäure bzw. deren Natriumsalz erhalten wird.

### Hydroxyethylcellulose (HEC)

Darstellung durch Ethoxylierung von Alkalicellulose, wobei die Reaktion mit den Hydroxygruppen im Cellulosemolekül, aber auch an bereits gebildeten Hydroxyethylgruppen eintreten kann.

### Carboxymethylhydroxethylcellulose (CMHEC)

stellt einen gemischten Celluloseether dar, bei dem zusätzlich zur Carboxymethylierung noch eine Ethoxylierung des Produktes erfolgt ist.

### Beispiel

Zur Anmischung des Verfüllungsmediums wurde ein Wasser (SSW) mit folgender Zusammensetzung verwendet:

| | |
|---|---|
| Gesamtsalzgehalt | 100,0 mg/L |
| Natrium | 10,8 mg/L |
| Calcium | 27,1 mg/L |
| Chlorid | 47,9 mg/L |
| Carbonat | 14,2 mg/L |
| Wasserhärte | 0,7 mmol/L |

Als Basisversuch wurden 125 g SBF-Troptogel® der Firma Preussag Anlagenbau GmbH, Hannover mit den Grundbestandteilen Gips, Portlandzement PZ 45f, granulierter Hüttensand (Hochofenschlacke) und Natrium-aktivierter Bentonit als Verfüllungsmedium in 500 ml Wasser angemischt. Die Anmischung erfolgte in einem Hamilton Beach Mischer auf Stufe "Low". Das Wasser wurde vorgelegt, auf die Vortex das pulverförmige SBF-Troptogel® eingestreut und 30 Minuten lang gerührt. Es resultierte eine zementgraue Suspension. Diese Suspension war nicht stabil und trennte sich nach Stillstand innerhalb von 24 Stunden zu etwa einem Fünftel in eine klare wäßrige Oberphase und eine entsprechend große, darunter befindliche suspensionshaltige Phase auf.

Gemäß der Erfindung erfolgt die Anmischung wie vorgenannt, jedoch wurden vor der Anmischung der Basiskomponente SBF-Troptogel® als polymere Saccharid- Hilfsstoffe die Polysaccharid-Zusätze zugesetzt. Es handelt sich dabei um Hydroxyethylcellulose (HEC) und Xanthan (XC).

Der Basiskomponente wurde zunächst je einer der vorgenannten Zusätze zugemischt, so daß die Konzentration des polymeren Saccharid-Hilfsstoffes zwischen 0,5 und 5 kg/m³ in der fertigen Suspension betrug. Jeweils 100 ml dieser Suspension wurden zur Beobachtung des Sedimentationsverhaltens in ein graduiertes 150 ml Becherglas (hohe Form: D = 53 mm, H = 96 mm) eingefüllt und die Separation in eine überstehende Wasserphase und die darunterbefindliche Suspension nach Ablauf von 24 Stunden anteilig bestimmt.

Die Ergebnisse dieser Versuche sind in Tabelle 1 zusammenfassend dargestellt. Eine eindeutige Verbesserung der Eigenschaften der Basissuspension wurde mit den Produkten HEC bzw. XC ab einer Einsatzkonzentration von 2 bzw. 1 g/l erreicht.

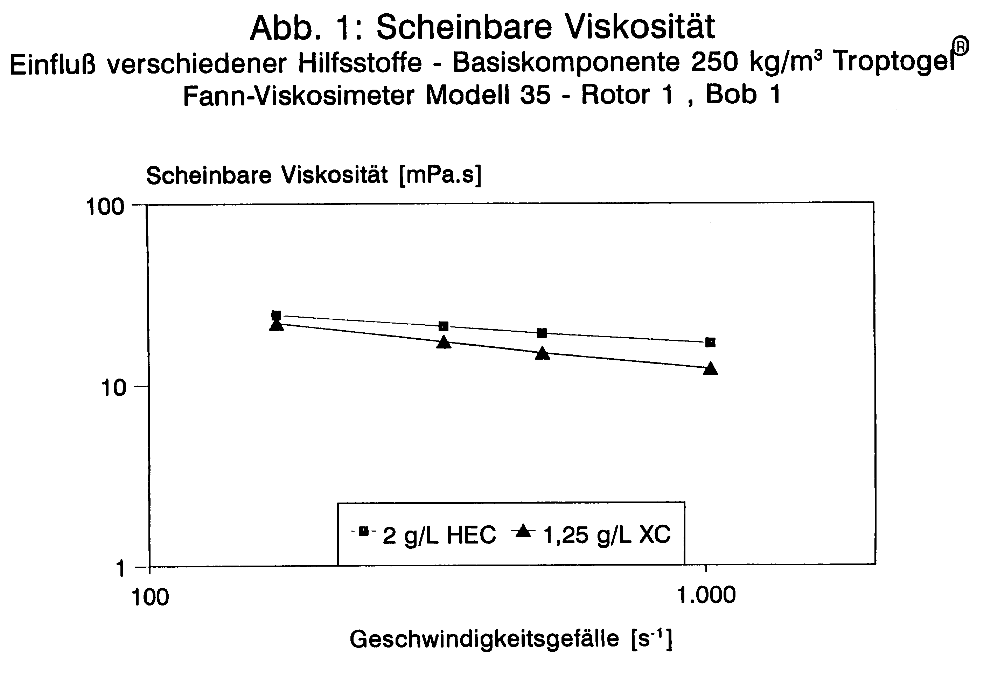

Ein Vergleich der Wirksamkeit der beiden Produkte mit 2 g/l HEC und 1,25 g/l XC zeigt, bei annähernd gleicher scheinbarer Viskosität (Abb. 1), das besonders günstige Verhalten des Xanthans. Bei einer vorzugsweise mit 1,5 kg/m³ Xanthan angesetzten Suspension erfolgte nach 24 Stunden nur eine geringfügige Separation von etwa 2 % einer klaren überstehenden Wasserphase. Andere aus der Bohrspültechnik bekannte polymere Hilfsstoffe wie Polyacrylamid (PAA), Carboxymethylcellulose (CMC), Glucan oder Carboxymethylhydroxyethylcellulose (CMHEC) zeigen überraschend eine nicht vergleichbar günstige Beeinflussung des Sedimentationsverhaltens der Suspension.

Die Bestimmung des Filterkuchenaufbaus und der Abgabe von Wasser aus der Bohrspülung erfolgte in einer nach API RP 13B-1 (Field Testing of Water-Based Drilling Fluids) standardisierten Filterpresse unter einem Druck von 7 bar. Gemessen wurde das nach 30 Minuten aus dem Spülungssystem ausgetretene Wasser sowie die Dicke des gebildeten Filterkuchens. In Tabelle 2 sind beispielhaft die für diverse Polymere ermittelten Filtratmengen und die entsprechenden Dicken der gebildeten Filterkuchen zusammengestellt. Besonders durch Xanthanzugabe wird die Filtratmenge entsprechend der technischen Zielvorstellung wesentlich reduziert. Zugabe von geringen Mengen weiterer Hilfsstoffe wie beispielsweise CMC können noch eine kleine zusätzliche Verbesserung bringen.

Hierbei wurden neben Xanthan bzw. HEC auch die folgenden Polymere allein oder in Kombination zugesetzt
Carboxymethylcellulose (CMC)
Carboxymethylhydroxyethylcellulose (CMHEC)

**Tabelle 1:**

| Sedimentationsverhalten der Suspension Einfluß verschiedener Hilfsstoffe Basiskomponente 250 kg/m³ Troptogel® | | |
|---|---|---|
| Hilfsstoff | Konzentration [kg/m³] | Suspension [%] |
| ohne | 0 | 81 |
| HEC | 2 | 93 |
| HEC | 3 | 96 |
| HEC | 5 | 99,5 |
| Xanthan | 1 | 95 |
| Xanthan | 1,25 | 96,5 |
| Xanthan | 1,5 | 98 |
| Xanthan | 2 | 98,5 |
| Xanthan | 3 | 99 |
| Xanthan | 5 | 99,5 |

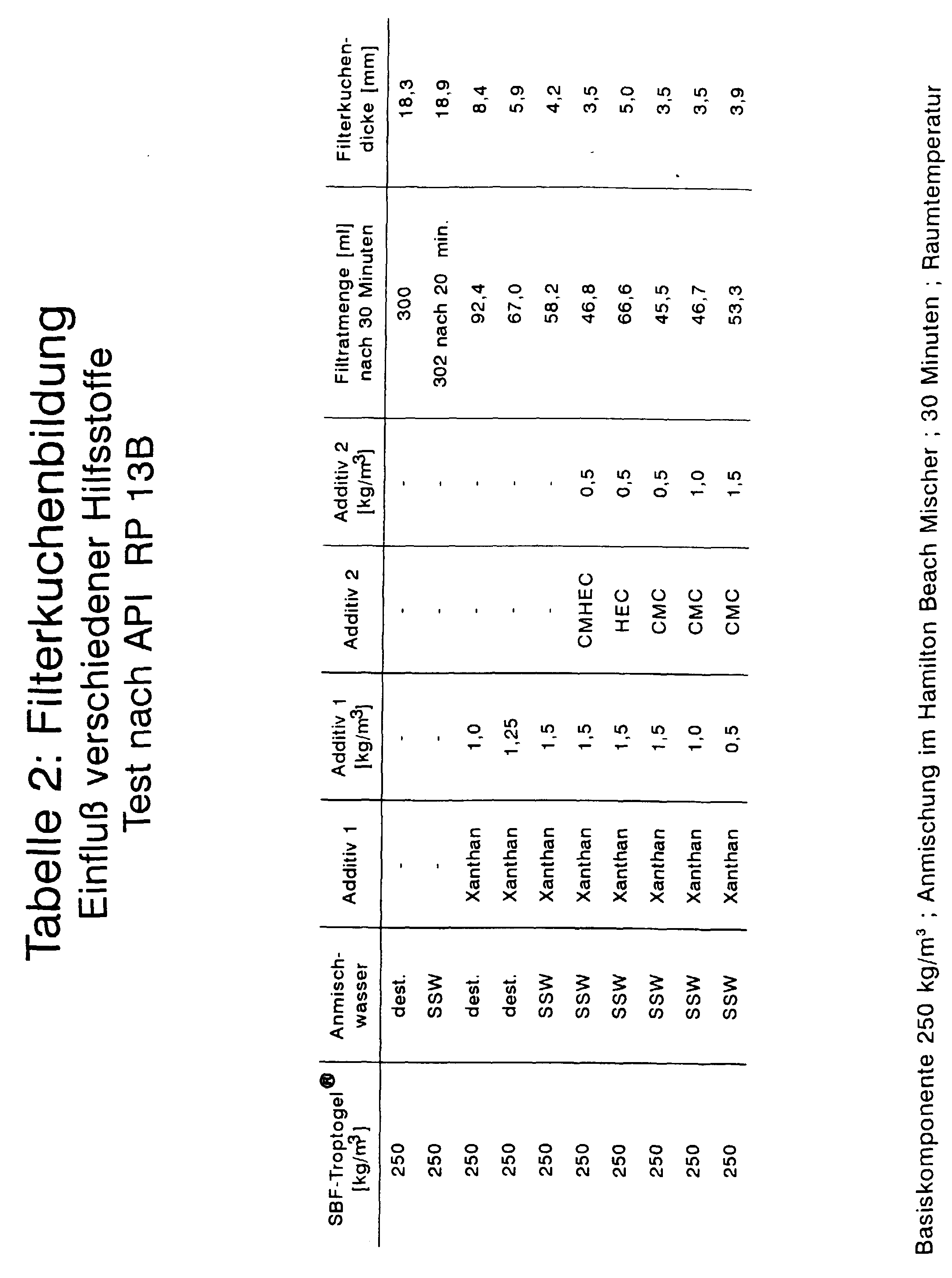

## Patentansprüche

1. Anwendung von flüssigen Medien enthaltend Wasser und Bentonit sowie Zemente mit einem Gehalt an Xanthan (XC) und/oder Hydroxyethyl-cellulose (HEC) als Bohrspül- und Verfüllungsmedium beim Abteufen von seismischen Flachbohrungen.

2. Anwendung von flüssigen Medien nach Anspruch 1,
mit einem Gehalt an XC von 0,5 g/l bis 6 g/l, insbesondere 1 g/l bis 4 g/l Flüssigmedium.

3. Anwendung von flüssigen Medien nach Anspruch 1,
mit einem Gehalt an HEC von 1 g/l bis 8 g/l, insbesondere 2 g/l bis 6 g/l Flüssigmedium.

4. Anwendung von flüssigen Medien nach einem der vorhergehenden Ansprüche, mit einem Zusatz von einem oder mehreren weiteren polymeren Sacchariden, insbesondere Carboxymethylhydroxyethylcellulose (CMHEC) und Carboxymethylcellulose (CMC).

5. Anwendung von flüssigen Medien nach einem der vorhergehenden Ansprüche, mit einem Gehalt an XC mit CMHEC, HEC und/oder CMC.

## Claims

1. The use of liquid media containing water and bentonite as well as cements comprising xanthane (XC) and/or hydroxyethylcellulose (HEC) as a drilling fluid and back-filling medium for sinking seismic flat boreholes.

2. The use of liquid media according to claim 1, wherein the XC content is from 0.5 g/l to 6 g/l, particularly from 1 g/l to 4 g/l of liquid medium.

3. The use of liquid media according to claim 1, wherein the HEC content is from 1 g/l to 8 g/l, particularly from 2 g/l to 6 g/l of liquid medium.

4. The use of liquid media according to any one of the preceding claims, wherein one or more additional polymeric saccharide(s), particularly carboxymethylhydroxyethylcellulose (CMHEC) and carboxymethylcellulose (CMC), is (are) added.

5. The use of liquid media according to any one of the preceding claims, wherein the liquid media comprise XC plus CMHEC, HEC and/or CMC.

## Revendications

1. Utilisation de milieux liquides contenant de l'eau et de la bentonite ainsi que du ciment avec une teneur en xanthane (XC) et/ou hydroxyéthylcellulose (HEC) comme milieu de forage avec injection d'eau et de remplissage lors du creusage du sondage horizontal sismique.

2. Utilisation de milieux liquides suivant la revendication 1, avec une teneur en XC de 0,5 g/litre à 6 g/litre, en particulier 1 g/litre à 4 g/litre de milieu liquide.

3. Utilisation de milieux liquides suivant la revendication 1, avec une teneur en HEC de 1 g/litre à 8 g/litre, en particulier 2 g/litre à 6 g/litre de milieu liquide.

4. Utilisation de milieux liquides suivant l'une quelconque des revendications précédentes, avec une addition d'un ou de plusieurs autres saccharides polymères, en particulier, carboxyméthylhydroxyéthylcellulose (CMHEC) et carboxyméthylcellulose (CMC).

5. Utilisation de milieux liquides suivant l'une quelconque des revendications précédentes, contenant du XC avec CMHEC, HEC et/ou CMC.
